# FASCICULE DE BREVET EUROPEEN

(11) **EP 3 572 156 B1**
(45) Date de publication et mention de la délivrance du brevet: **22.07.2020**
(21) Numéro de dépôt: 19171142.3
(22) Date de dépôt: 25.04.2019
(51) Int. Cl.: B07C 3/14, B64F 1/36

(54) **PROCEDE DE TRI DE BAGAGES DANS UN AEROPORT**
VERFAHREN ZUR GEPÄCKSORTIERUNG AN EINEM FLUGHAFEN
METHOD FOR SORTING LUGGAGE IN AN AIRPORT

(30) Priorité: 24.05.2018 FR 1870600
(43) Date de publication de la demande: 27.11.2019
(73) Titulaire: Solystic, 92220 Bagneux (FR)
(72) Inventeur: FLOURY, Alexa, 75013 PARIS (FR); EL BERNOUSSI, Hicham, 75015 Paris (FR); PIEGAY, Emmanuel, 75010 PARIS (FR)
(74) Mandataire: Prugneau, Philippe

(56) Documents cités:
- WO-A1-2017/137106

## Description

### Domaine technique

L'invention concerne un procédé de tri de bagages dans un aéroport, dans lequel les bagages sont transportés par un système de convoyage, et dans lequel on acquiert une image numérique d'une étiquette accrochée à un bagage et éditée pour identifier ledit bagage, et on reconnait automatiquement à partir de ladite image un vol aérien pour commander ledit système de convoyage et orienter le bagage dans l'aéroport.

### Technique antérieure

Un tel type de procédé est décrit dans la demande de brevet WO 2017/137106 ou dans la demande de brevet EP-A-3 301 624.

Selon le procédé décrit dans cette demande de brevet, des bagages sont munis d'une étiquette d'identification portant des lignes d'informations textuelles ainsi qu'un code-barres, ce dernier permettant d'associer chaque bagage à un ensemble de données enregistrées dans une base de données de bagages construite au fur et à mesure de l'enregistrement des bagages à un aéroport de départ.

Les données enregistrées peuvent représenter un nom de passager, un numéro d'embarquement, un numéro de vol, des codes d'aéroport de départ, d'arrivée et, le cas échéant, de transit, ou encore un plan de vol.

Ainsi, la lecture du code-barres permet d'identifier et d'orienter un bagage dans un système de convoyage automatisé dans l'aéroport de départ comme dans l'aéroport d'arrivée ou, le cas échéant, dans un aéroport de transit, les informations pertinentes de la base de données étant transmises aux aéroports concernés.

En cas de difficulté de lecture du code-barres, par exemple en cas d'étiquette salie ou endommagée, la demande de brevet WO 2017/137106 suggère de baser une identification du bagage sur les informations textuelles au moyen d'une analyse de l'étiquette par reconnaissance optique de caractères incluant une comparaison entre les éléments textuels reconnus et les données enregistrées dans la base de donnée de bagages, dans le but d'éviter d'avoir recours à un opérateur humain, source de perte d'efficacité et de coût supplémentaire.

En revanche, cette demande de brevet ne répond pas aux problèmes de tri de bagages dus à un manque dans la base de données, à une interruption de l'accès à celle-ci, ou à un retard dans la transmission de ses données.

Dans de telles situations, il n'y a aujourd'hui d'autres solutions que de procéder à un tri manuel, opération extrêmement coûteuse et pouvant amener à d'importants retards, lorsque par exemple les données de bagages d'un vol complet sont indisponibles au moment de l'arrivée de ce vol à un aéroport.

### Exposé de l'invention

A cet effet, l'invention a pour objet un procédé de tri de bagages dans un aéroport dans lequel les bagages sont transportés par un système de convoyage, et dans lequel on acquiert au moins une image numérique d'une étiquette qui est accrochée à un bagage et qui a été éditée pour identifier de manière univoque ledit bagage, l'étiquette comprenant un code d'identification lisible par une machine, ce code d'identification étant prévu pour correspondre à un ensemble de données d'une première base de données de bagages construite au fur et à mesure de l'enregistrement des bagages, dans lequel on tente d'identifier le bagage par une lecture de ce code d'identification, et on reconnait automatiquement à partir de ladite image un vol aérien correspondant audit bagage pour commander ledit système de convoyage et orienter le bagage dans l'aéroport, le procédé comprenant les étapes suivantes : on récupère de ladite image numérique des informations textuelles imprimées sur l'étiquette, on compare ces informations textuelles à des données enregistrées dans une seconde base de données locale à l'aéroport avant l'édition de l'étiquette pour identifier ledit bagage, cette second base de donnée étant distincte de ladite première base de données de bagages, les données de la seconde base de données étant représentatives d'une liste de vols aériens à destination ou en partance dudit aéroport pour détecter une concordance et, en réponse à une détection de concordance, on transmet automatiquement une donnée représentative d'un numéro de vol aérien correspondant au bagage au système de convoyage.

De cette manière, le tri d'un bagage dans un aéroport peut se baser sur l'association de ce dernier à un vol aérien donné sur la base d'information d'une base de données locale dont l'accès et l'exhaustivité peuvent être aisément assurés.

Le procédé selon l'invention peut avantageusement présenter les particularités suivantes :
- dans la reconnaissance automatique du vol aérien, on peut détecter et identifier une ligne des plus gros caractères présents sur l'étiquette, on peut isoler une zone de l'étiquette comprenant cette ligne, on peut détecter une autre ligne de caractères situées dans cette zone, et on peut appliquer à cette ligne une opération de reconnaissance de caractères ;
- on peut comparer les informations textuelles récupérées de l'image numérique aux données dudit ensemble de données de la base de données de bagages pour détecter une concordance ou une non-concordance entre celles-ci ;
- en cas de détection de non-concordance, on peut opérer une transmission de données représentatives d'une information de non-lecture à l'unité de tri automatique pour commander l'unité de convoyage;
- il peut en outre comprendre une étape de détection d'un échec du déchiffrage dudit code d'identification lisible par une machine au cours de la tentative d'identification du bagage par la lecture de ce code d'identification, et, en réponse à la détection, les informations textuelles récupérées des images numériques peuvent être utilisées par le système de convoyage pour trier le bagage ;
- il peut en outre comprendre une étape de détection d'un échec d'association dudit code d'identification déchiffré à l'ensemble de données de la base de données de bagages en cas d'une absence de données correspondantes dans cette base de données, et, en réponse à cette détection, les informations textuelles récupérées des images numériques peuvent être utilisées par le système de convoyage pour trier le bagage ; et
- il peut en outre comprendre une étape de détection d'un échec d'association dudit code d'identification déchiffré à l'ensemble de données de la base de données de bagages en cas d'une impossibilité de connexion à cette base de données de bagages, et, en réponse à cette détection, les informations textuelles récupérées des images numériques peuvent être utilisées par le système de convoyage pour trier le bagage.

Ainsi, le tri du bagage peut se baser sur des informations textuelles reconnues sur l'étiquette par comparaison à des données d'une base de données de vols aériens préparée à l'avance, ces données reconnues pouvant se substituer ou se combiner à des informations stockées dans une base de données de bagages constamment rafraîchie et possiblement distante de l'aéroport où se trouve le bagage, et donc dont l'exhaustivité et l'accès sont susceptibles de poser problème, ce qui fiabilise l'identification d'un bagage et/ou son tri automatique.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1A illustre des aéroports et des bases de données associées ;
- les figures 1B et 1C illustrent des étiquettes de bagage ;
- la figure 1D illustre un système de tri ;
- la figure 2A représente un procédé de tri de bagages et les figures 2B, 2C et 2D illustrent respectivement un premier, un second et un troisième mode de tri ;
- les figures 3A, 3B et 3C représentent respectivement une base de données de bagages, une base de données de vols, et une table de correspondance ; et
- la figure 3D représente un procédé de tri par vidéocodage.

### Description d'un mode de réalisation

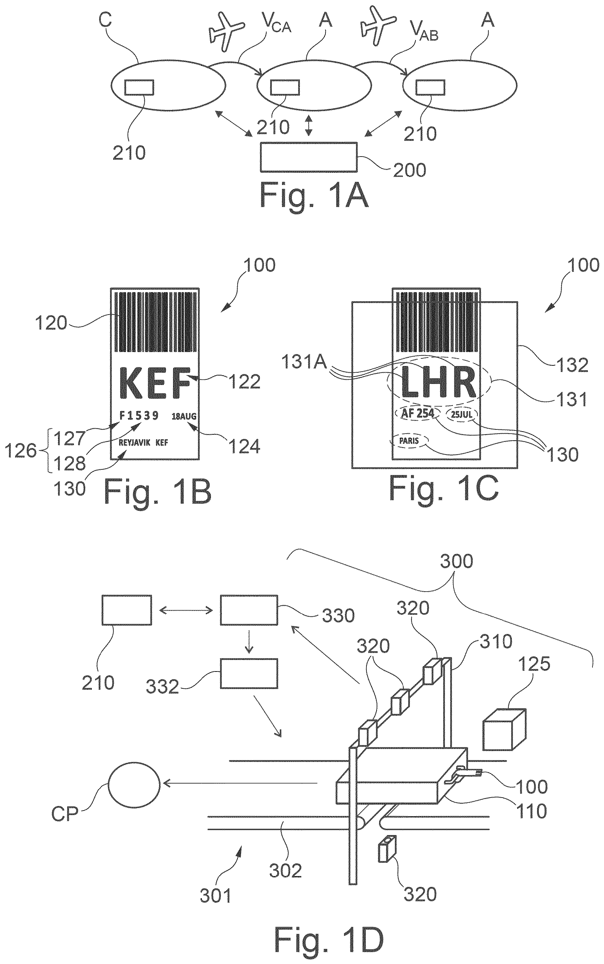

Un procédé de tri de bagages en aéroport selon l'invention est illustré par les figures 1A à 3D.

Lors d'un voyage par avion d'un aéroport A à un aéroport B ou d'un aéroport C à l'aéroport A, respectivement V_{AB} et V_{CA}, chaque bagage 110 transporté est identifié à l'aide d'une étiquette 100 éditée au moment de l'enregistrement du bagage correspondant et comprenant un code d'identification tel qu'un code-barres 120 et des informations textuelles de différents types pouvant être utiles au suivi de ce bagage jusqu'à sa destination finale.

Le code d'identification peut être un code d'identification par machine, tel que les codes QR ou les puces RFID, sans être restreint aux seuls codes-barres.

Les informations indiquées sur l'étiquette comprennent au moins un code IATA d'aéroport composé généralement d'un trigramme 122 correspondant à un aéroport et un numéro de vol 126 composé d'un nom codé 127 d'une compagnie aérienne et d'un numéro de vol 128 interne à la compagnie, mais peuvent également comprendre, par exemple, une date 124 ou une ville 130.

Une base de données de bagages 200 est dynamique, créée au fur et à mesure de l'enregistrement des bagages 110 de manière à stocker ces informations, et éventuellement des informations supplémentaires, en association avec les codes-barres correspondants, et est partagée entre plusieurs aéroports au moyen d'un réseau informatique.

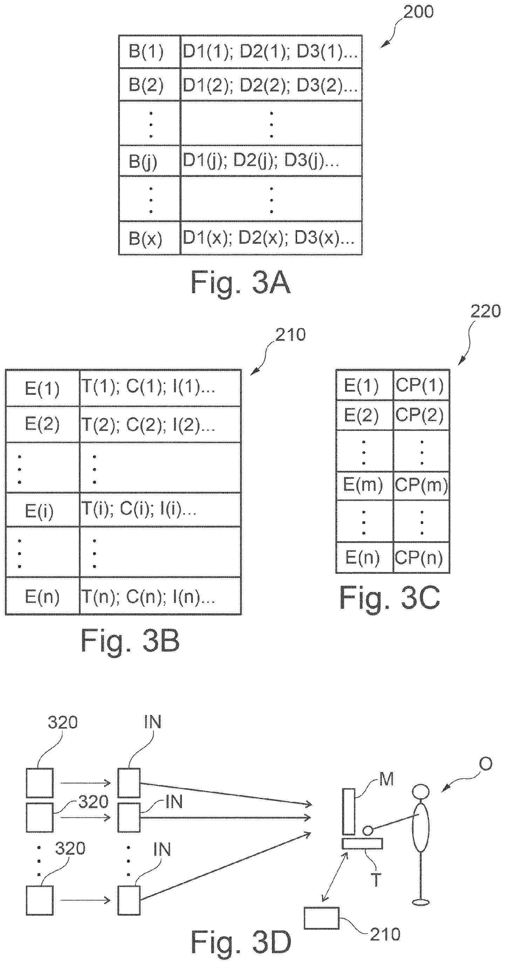

Ainsi, une base de données de bagages 200 peut être constituée d'ensembles B(j) de données Dk(j) de différents types k (propriétaire, code IATA, numéro de vol, date, etc), chaque ensemble correspondant à un bagage (j), comme illustré par la figure 3A, et a pour fonction l'identification, le suivi et le tri des bagages tout au long de leurs parcours.

En outre, une base de données de vols aériens 210 est constituée pour chaque aéroport, listant les vols à destination ou en partance de l'aéroport correspondant durant une période d'activité donnée, par exemple une ou plusieurs journées consécutives d'activité de l'aéroport, comprenant en particulier le jour de traitement d'un bagage selon l'invention.

Ces bases de données de vols aériens 210 sont constituées d'ensembles E(i) de données correspondants chacun à un vol aérien (i), ces données comprenant au moins un trigramme d'aéroport (code IATA d'aéroport de destination) T(i), et un numéro de vol aérien composé d'un nom codé C(i) de compagnie aérienne et d'un numéro de vol I(i) interne à la compagnie aérienne, comme illustré par la figure 3B.

Les bases de données de vols aériens peuvent être préparées largement à l'avance, avant le début d'une période d'activité donnée de l'aéroport correspondant et avant l'enregistrement des bagages embarqués à bord des vols listés, et n'ont pas vocation à être modifiées au cours de cette période ; ces bases de données peuvent donc être considérées comme statiques au moins au cours d'une période d'activité donnée, en particulier par rapport à des bases de données bagages dynamiques, rafraîchies au fur et à mesure de l'enregistrement des bagages ou à la fin de l'enregistrement des bagages d'un vol aérien donné, et ce y compris pendant la période d'activité de l'aéroport.

De plus ces bases de données de vols peuvent être localisées dans et propres à l'aéroport concerné plutôt que d'être distante et d'imposer des connexions longues distances.

Ainsi, les bases de données de vols impliquent une meilleure stabilité et peuvent être connues bien plus à l'avance qu'une base de données de bagages, et leur emploi permet donc une fiabilité opérationnelle bien plus grande que l'emploi de la base de données de bagages.

Selon un procédé du présent mode de réalisation illustré par la figure 1D, des bagages 110 dans un aéroport donné sont convoyés par un système de convoyage 301, dans lequel une unité de tri automatique 332 commande une unité de convoyage 302, telle qu'un ensemble de bandes de convoyage, qui fait passer les bagages au niveau d'un système d'identification automatique 300 comprenant un dispositif de lecture 125 des codes-barres 120 portés par les étiquettes 100 en vue d'un tri en fonction des données Dk(j) associées à ce code-barres dans la base de données de bagages 200, le dispositif de lecture 125 étant connecté à la base de donnée de bagage 200.

Le système d'identification automatique 300 comporte en outre un portique 310 équipé de plusieurs caméras 320 agencées de manière à acquérir des images numériques des bagages sous différents angles de vue, et ce afin de maximiser les chances d'avoir des images exploitables des étiquettes 100.

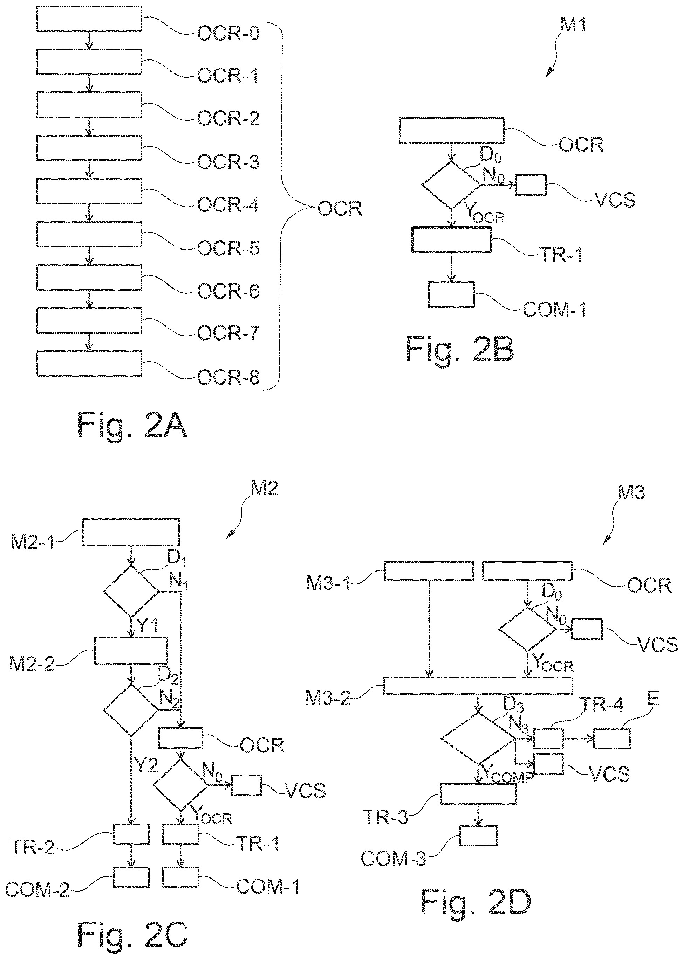

Dans un procédé de tri de bagages illustré par la figure 2A, un bagage est passé sous le portique, de sorte qu'on prenne au moins une image numérique de l'étiquette accrochée audit bagage au cours d'une étape préliminaire OCR-0 d'une analyse logicielle de reconnaissance optique de caractères portant sur l'étiquette, dite analyse OCR.

Le système d'identification automatique 300 comprend une unité de traitement informatique 330 qui est connectée à l'unité de tri automatique 332, au dispositif de lecture 125 et à la base de données de vols aériens 210 de l'aéroport donné, et qui soumet cette image numérique à l'analyse OCR de manière à y repérer des informations textuelles ou lignes de textes, présentes sous forme de lignes 130 et 131 de caractères alphanumériques et à les comparer automatiquement aux données T(i), C(i) et I(i) des ensembles E(i) de données de ladite base de données de vols aériens 210, afin de détecter une concordance entre les informations textuelles et ces données.

Le repérage de lignes de caractères pertinentes, c'est-à-dire correspondant potentiellement aux données de la base de données de vols, utilise avantageusement le fait que, par convention, les caractères du trigramme 122 d'aéroport sont les plus gros d'une étiquette de bagage 100.

Ainsi, la reconnaissance OCR de ces lignes de caractères peut comprendre, dans cet ordre et comme illustré par la figure 2A, une binarisation OCR-1 simple ou multiple de l'image numérique, une détermination OCR-2 d'agrégations 131_{A} de pixels de l'image binarisée ayant une même couleur et une taille attendue de caractères d'un trigramme d'aéroport 122 qui correspond à une ligne des plus gros caractères présents sur l'image de l'étiquette, un calcul OCR-3 d'un graphe de voisinage desdites agrégations 131_{A}, une détermination OCR-4 qu'une ligne 131 de caractères alphanumériques forme un triplet d'agrégations voisines à partir dudit graphe de voisinage, ce triplet d'agrégations pouvant plausiblement correspondre à un trigramme 122 d'aéroport, une détermination et une extraction OCR-5 d'une zone d'intérêt 132 de l'image sensiblement centrée sur ledit triplet d'agrégations 131, un redressement et une binarisation OCR-6 de ladite zone d'intérêt de l'image, une localisation OCR-7 de lignes de texte 130 à proximité dudit triplet d'agrégation dans ladite zone d'intérêt de l'image redressée, et une opération OCR-8 d'analyse des caractères dudit triplet d'agrégation et/ou desdites lignes de texte au cours de laquelle on produit des hypothèses sur les informations textuelle des lignes de texte 130 et 131 et on vérifie ces hypothèses en les comparant aux données T(i), C(i) et I(i) de la base de données de vols 210 de l'aéroport.

Dans un premier mode M1, illustré par la figure 2B, en réponse à une détection d'une concordance Y_{OCR} des hypothèses de l'analyse OCR avec au moins l'une des données T(i), C(i) et I(i) de l'un des ensembles E(i) de la base de donnée au cours d'une étape D₀ de détection de concordance ou de non-concordance des hypothèses, l'unité de traitement informatique opère une transmission TR-1 d'une donnée représentative d'un vol aérien correspondant au bagage, telle qu'un numéro de vol aérien 126 correspondant, à l'unité de tri automatique 332 qui commande alors, au cours d'une étape COM-1, l'unité de convoyage 302 sur la base des informations obtenues par ladite analyse OCR des étapes OCR-0 à OCR-8 et/ou des données dudit ensemble de données E(i) en concordance avec les informations textuelles de l'étiquette récupérées des images numériques, de manière à procéder à un tri en acheminant le bagage vers un point de collecte PC.

Le tri opéré par l'unité de tri automatique 332 peut être par exemple effectué au moyen d'une table d'assignation 220 assignant un point de collecte CP(m) de bagages à chaque vol aérien (m) et donc à chaque ensemble E(m) de données de la base de données de vols aériens 210 comme illustré par la figure 3C.

Les points de collecte peuvent être par exemple une entrée de convoyeur, une porte d'embarquement, ou encore un carrousel de distribution de bagages.

Dans le premier mode M1, le tri repose totalement sur les informations obtenues au moyen de l'analyse OCR, et donc sur les données de vols aériens stockées dans une base de données de vols aériens, et l'analyse OCR peut représenter une solution indépendante sur laquelle baser un tri des bagages.

Un second mode M2, illustré par la figure 2C, diffère du premier mode M1 en ce qu'on n'utilise l'analyse OCR pour reconnaitre des données d'un vol aérien correspondant au bagage et opérer la transmission TR-1 au système de convoyage qu'en cas d'un échec N₁ du déchiffrage M2-1 du code-barres détecté au cours d'une étape de détection D₁ de réussite ou d'échec de déchiffrage du code-barres, par exemple en cas de code-barres endommagé et illisible, ou en cas d'échec N₂ d'association M2-2 du code déchiffré à un ensemble de données B(j) de la base de données 200 de bagages au cours d'une étape D₂ de détection de réussite ou d'échec de l'association, par exemple en cas d'impossibilité de connexion à la base de données de bagages ou d'absence de données pertinentes dans celle-ci.

Dans le mode M2, en cas de succès Y1 de déchiffrage du code-barres puis de succès Y2 d'association du code déchiffré à un ensemble de données B(j) de la base de données de bagages 200, on opère une transmission TR-2 des données représentatives du bagage au système de tri automatique 332 qui commande alors au cours d'une étape COM-2 l'unité de convoyage 302 en fonction des informations de l'ensemble de données de la base de données de bagages associé au bagage par son étiquette, pour procéder au tri du bagage.

Dans un troisième mode M3, illustré par la figure 2D, on procède à une lecture M3-1 d'un code-barres de l'étiquette d'un bagage et à l'analyse OCR décrite plus haut de la même étiquette, puis on opère une comparaison M3-2 entre les données obtenues par les deux méthodes, de manière à croiser les données obtenues par le biais de ces deux méthode et augmenter ainsi la fiabilité du tri de bagages.

En cas de détection d'une concordance Y_{COMP} entre les données obtenues par les deux méthodes au cours d'une étape D₃ de détection de concordance ou de non-concordance des données, on opère une transmission TR-3 de données représentatives du bagage à l'unité de tri automatique 332 laquelle commande alors en réponse l'unité de convoyage 302 au cours d'une étape COM-3 pour procéder au tri du bagage.

En cas de détection N₃ de non-concordance entre les données obtenues par les deux méthodes au cours de l'étape D₃, on opère une transmission TR-4 de données représentatives d'une information de non-lecture à l'unité de tri automatique 332 laquelle commande alors en réponse l'unité de convoyage 302 pour faire suivre un traitement particulier au bagage au cours d'une étape E en le mettant à l'écart du système de tri automatique par exemple en l'amenant à une sortie pré-déterminée et/ou en lui appliquant une opération de vidéocodage ou un tri entièrement manuel, afin d'augmenter la fiabilité du tri.

Pour chacun des modes M1, M2 et M3, en cas d'impossibilité d'arriver à un degré de certitude suffisant pour le tri, par exemple en cas d'impossibilité N₀ de détecter une coïncidence entre les hypothèses produites lors de l'analyse OCR et les données de la base de données de vols détectée au cours d'une étape D₀ de détection de coïncidence ou en cas de non-concordance N₃ entre les données obtenues par lecture M3-1 d'un code-barres et les données obtenues par l'analyse OCR détectée au cours de l'étape D₃ de détection de concordance, on peut employer une procédure de vidéocodage VCS dans laquelle des images numériques IN dudit bagage acquises par les caméras 320 sont présentées à un opérateur humain O au moyen d'un moniteur M, opérateur qui recherche alors manuellement une correspondance entre des informations textuelles visibles dans ces images et lesdites données de la base de données de vols 210 au moyen d'un terminal informatique T connecté à celle-ci, comme illustré par la figure 3D.

Il va de soi que la présente invention ne saurait être limitée au mode de réalisation tel qu'exposé plus haut, susceptible de subir des modifications sans pour autant sortir du cadre de l'invention.

## Revendications

1. Procédé de tri de bagages dans un aéroport (A) dans lequel les bagages sont transportés par un système de convoyage (301), et dans lequel on acquiert au moins une image numérique d'une étiquette (100) qui est accrochée à un bagage (110) et qui a été éditée pour identifier de manière univoque ledit bagage, l'étiquette comprenant un code (120) d'identification lisible par une machine, ce code d'identification étant prévu pour correspondre à un ensemble (B(j)) de données (D₁(j), D₂(j)) d'une première base de données de bagages (200) construite au fur et à mesure de l'enregistrement des bagages, dans lequel on tente d'identifier le bagage par une lecture de ce code d'identification (120), et on reconnait automatiquement à partir de ladite image un vol aérien (V_{CA}, V_{AB}) correspondant audit bagage pour commander ledit système de convoyage et orienter le bagage dans l'aéroport, procédé **caractérisé en ce qu'**il comprend les étapes suivantes : on récupère de ladite image numérique des informations textuelles (131, 130) imprimées sur l'étiquette, on compare ces informations textuelles à des données enregistrées (T(i), C(i), I(i)) dans une seconde base de données (210) locale à l'aéroport avant l'édition de l'étiquette (100) pour identifier ledit bagage, cette second base de donnée étant distincte de ladite première base de données de bagages (200), les données de la seconde base de données (210) étant représentatives d'une liste de vols aériens à destination ou en partance dudit aéroport (A) pour détecter une concordance et, en réponse à une détection de concordance (Y_{OCR}), on transmet automatiquement une donnée représentative d'un numéro de vol aérien (126) correspondant au bagage (110) au système de convoyage (301) .

2. Le procédé selon la revendication 1, **caractérisé en ce que** dans la reconnaissance automatique du vol aérien, on détecte et on identifie une ligne (131) des plus gros caractères présents sur l'étiquette, on isole une zone (132) de l'étiquette comprenant cette ligne, on détecte une autre ligne de caractères (130) situées dans cette zone, et on applique à cette ligne une opération de reconnaissance de caractères (OCR).

3. Le procédé selon la revendication 1, **caractérisé en ce qu'**on compare (M3-2) les informations textuelles récupérées de l'image numérique aux données dudit ensemble de données de la première base de données de bagages pour détecter (D₃) une concordance ou une non-concordance entre celles-ci.

4. Le procédé selon la revendication 3, **caractérisé en ce qu'**en cas de détection de non-concordance (N₃), on opère une transmission (TR-4) de données représentatives d'une information de non-lecture à l'unité de tri automatique (332) pour commander l'unité de convoyage.

5. Le procédé selon la revendication 1, **caractérisé en ce qu'**il comprend en outre une étape (D₁) de détection d'un échec (N₁) du déchiffrage (M2-1) dudit code d'identification (120) lisible par une machine au cours de la tentative d'identification du bagage par la lecture de ce code d'identification, et **en ce que**, en réponse à la détection, les informations textuelles récupérées des images numériques sont utilisées par le système de convoyage (301) pour trier le bagage.

6. Le procédé selon la revendication 1, **caractérisé en ce qu'**il comprend en outre une étape (D₂) de détection d'un échec (N₂) d'association (M2-2) dudit code d'identification (120) déchiffré à l'ensemble de données B(j) de la première base de données (200) de bagages en cas d'une absence de données correspondantes dans cette première base de données, et **en ce que**, en réponse à cette détection, les informations textuelles récupérées des images numériques sont utilisées par le système de convoyage (301) pour trier le bagage.

7. Le procédé selon la revendication 1, **caractérisé en ce qu'**il comprend en outre une étape (D₂) de détection d'un échec (N₂) d'association (M2-2) dudit code d'identification (120) déchiffré à l'ensemble de données (B(j)) de la première base de données (200) de bagages en cas d'une impossibilité de connexion à cette première base de données (200) de bagages, et **en ce que**, en réponse à cette détection, les informations textuelles récupérées des images numériques sont utilisées par le système de convoyage (301) pour trier le bagage.

## Patentansprüche

1. Verfahren zum Sortieren von Gepäckstücken in einem Flughafen (A), bei dem die Gepäckstücke von einem Fördersystem (301) transportiert werden, und bei dem wenigstens ein digitales Bild eines an einem Gepäckstück (110) angeschlossenem Etikett (100) gewonnen wird, welches ausgegeben wurde, um auf eindeutige Weise das Gepäckstück zu identifizieren, wobei das Etikett einen maschinenlesbaren Identifikations-Code (120) umfasst, wobei dieser Identifikations-Code vorgesehen ist, um einer Menge (B(j)) von Daten (D₁(j), D₂(j)) einer ersten Datenbank von Gepäckstücken (200) zu entsprechen, die im Verlauf der Aufnahme der Gepäckstücke aufgebaut wurde, bei dem versucht wird, das Gepäckstück durch ein Lesen des Identifikations-Codes (120) zu identifizieren, und bei dem automatisch, ausgehend von diesem Bild, ein dem Gepäckstück entsprechender Flug (V_{CA}, V_{AB}) erkannt wird zum Steuern des Fördersystems und zum Leiten des Gepäckstücks in dem Flughafen, welches Verfahren **dadurch gekennzeichnet ist, dass** es die folgende Schritte umfasst: Extrahieren aus dem digitalen Bild der auf dem Etikett gedruckten Textinformationen (131, 130), Vergleichen dieser Textinformationen mit gespeicherten Daten (T(i), C(i), I(i)) in einer zweiten lokalen Datenbank (210) am Flughafen vor der Ausgabe des Etiketts (100) zum Identifizieren des Gepäckstücks, wobei die zweite Datenbank von der ersten Datenbank von Gepäckstücken (200) verschieden ist, wobei die Daten der zweiten Datenbank (210) repräsentativ sind für eine Liste von Flügen, deren Bestimmungsort oder Abflugort der Flughafen (A) ist, zum Erfassen einer Konkordanz, und, in Reaktion auf das Erfassen einer Konkordanz (Y_{OCR}), automatisches Übertragen eines für eine Nummer eines dem Gepäckstück (110) entsprechenden Fluges (126) repräsentativen Datensatzes an das Fördersystem (301).

2. Verfahren nach Anspruch 1, **dadurch gekennzeichnet, dass** bei der automatischen Erkennung des Fluges eine Zeile (131) der größten auf dem Etikett vorhandenen Zeichen erfasst und identifiziert wird, eine diese Zeile umfassende Zone (132) des Etiketts isoliert wird, eine andere Zeile von in dieser Zone angeordneten Zeichen (130) erfasst wird, und auf diese Zeile ein Zeichenerkennungsvorgang (OCR) angewendet wird.

3. Verfahren nach Anspruch 1, **dadurch gekennzeichnet, dass** die von dem digitalen Bild extrahierten Textinformationen mit den Daten der Menge von Daten der ersten Datenbank von Gepäckstücken verglichen werden (M3-2), um eine Konkordanz oder Nicht-Konkordanz zwischen diesen zu erfassen (D₃).

4. Verfahren nach Anspruch 3, **dadurch gekennzeichnet, dass** im Falle des Erfassens einer Nicht-Konkordanz (N₃) eine Übertragung (TR-4) von für eine nicht-Lese-Information repräsentativen Daten an die automatische Sortiereinheit (332) zum Steuern der Fördereinheit vorgenommen wird.

5. Verfahren nach Anspruch 1, **dadurch gekennzeichnet, dass** es ferner einen Schritt (D₁) des Erfassens eines Scheiterns (N₁) des Entziffern (M2-1) des durch eine Maschine lesbaren Identifikations-Codes (120) während des Versuchs einer Identifikation des Gepäcksstücks durch Lesen dieses Identifikations-Codes umfasst, und dass in Reaktion auf ein solches Erfassen die von den digitalen Bildern extrahierten Textinformationen von dem Fördersystem (301) zum Sortieren des Gepäckstücks verwendet werden.

6. Verfahren nach Anspruch 1, **dadurch gekennzeichnet, dass** es ferner einen Schritt (D₂) des Erfassens eines Scheiterns (N₂) einer Zuordnung (M2-2) des entzifferte Identifikations-Codes (120) zu der Menge von Daten B(j) der ersten Datenbank (200) von Gepäckstücken im Falle des Fehlens entsprechender Daten in dieser ersten Datenbank umfasst, und dass in Reaktion auf ein solches Erfassen die von den digitalen Bildern gewonnenen Textinformationen von dem Fördersystem (301) zum Sortieren des Gepäckstücks verwendet werden.

7. Verfahren nach Anspruch 1, **dadurch gekennzeichnet, dass** es ferner einen Schritt (D₂) des Erfassens eines Scheiterns (N₂) einer Zuordnung (M2-2) des entzifferten Identifikations-Codes (120) zu der Menge von Daten (B(j)) der ersten Datenbank (200) von Gepäckstücken im Falle der Unmöglichkeit einer Verbindung mit der ersten Datenbank (200) von Gepäckstücken umfasst, und dass in Reaktion auf ein solches Erfassen die von den digitalen Bildern gewonnenen Textinformationen von dem Fördersystem (301) zum Sortieren des Gepäckstücks verwendet werden.

## Claims

1. A method of sorting baggage at an airport (A), the method comprising: transporting the baggage by a conveyor system (301); and acquiring at least one digital image of a label (100) that is attached to a piece of baggage (110) and that was printed out to identify said piece of baggage unambiguously, the label including a machine-readable identification code (120) designed to correspond to a set (B(j)) of items of data (D₁(j), D₂(j)) from a baggage first database (200) compiled as the baggage is being checked in; the method further comprising attempting to identify the piece of baggage by reading said identification code (120); and, based on said image, automatically recognizing a flight (V_{CA}, V_{AB}) corresponding to said piece of baggage so as to control said conveyor system and so as to direct said piece of baggage at the airport; said method being **characterized in that** it further comprises the following steps: retrieving textual information (131, 130) that is printed on the label from said digital image; comparing said textual information with data (T(i), C(i), I(i)) that is recorded in a second database (210) that is local to the airport before the label (100) for identifying said piece of baggage is printed, said second database being distinct from said baggage first database (200), the data from the second database (210) being representative of a list of flights to or from said airport(A) with a view to detecting a match; and, in response to a match (Y_{OCR}) being detected, automatically transmitting data representative of a flight number (126) corresponding to the piece of baggage (110) to the conveyor system (301).

2. The method according to claim 1, **characterized in that**, in automatically recognizing the flight, the method further comprises: detecting and identifying a line (131) of the largest characters present on the label; isolating a region (132) of the label that includes said line; detecting another line of characters (130) situated within that region; and applying an optical character recognition (OCR) operation to said line.

3. The method according to claim 1, **characterized in that** it further comprises comparing (M3-2) the textual information retrieved from the digital image with the data from said set of items of data from the baggage first database so as to detect (D₃) a match or a non-match between said textual information and said items of data.

4. The method according to claim 3, **characterized in that** in the event a non-match (N₃) is detected, the method further comprises transmitting (TR-4) data representative of non-read information to the automatic sorting unit (332) so as to control the conveyor unit.

5. The method according to claim 1, **characterized in that** it further comprises a detection step (D₁) for detecting failure (N₁) to decipher (M2-1) said machine-readable identification code (120) during the attempt to identify the baggage by reading said identification code, and **in that**, in response to such detection, the textual information retrieved from the digital images is used by the conveyor system (301) for sorting the baggage.

6. The method according to claim 1, **characterized in that** it further comprises a detection step (D₂) for detecting failure (N₂) to associate (M2-2) said identification code (120) as deciphered with the set of items of data (B(j)) from the baggage first database (200) in the event of absence of corresponding data in said first database, and **in that**, in response to such detection, the textual information retrieved from the digital images is used by the conveyor system (301) to sort the baggage.

7. The method according to claim 1, **characterized in that** it further comprises a detection step (D₂) for detecting failure (N₂) to associate (M2-2) said identification code (120) as deciphered with the set of items of data (B(j)) from the baggage first database (200) in the event it is impossible to connect to said first database (200), and **in that**, in response to such detection, the textual information retrieved from the digital images is used by the conveyor system (301) to sort the baggage.
